# EUROPEAN PATENT APPLICATION

(11) **EP 4 087 214 A1**
(43) Date of publication of application: **09.11.2022**
(21) Application number: 21172860.5
(22) Date of filing: 07.05.2021
(51) Int. Cl.: H04L 29/08

(54) **A COMMUNICATION SYSTEM FOR AN ELECTRIC UTILITY GRID**

(71) Applicant: FIMER S.p.A., 20144 Milano (IT)
(72) Inventor: Vernia, Filippo, I-19121 La Spezia (SP) (IT); Bistoni, Fabio, I-06132 San Martino in Colle (PG) (IT); Fiacchini, Gabriele, I-52024 Loro Ciuffenna (AR) (IT)
(74) Representative: De Bortoli, Eros

(57) **Abstract**

A communication system for an electric utility grid, said communication system comprising:
- a plurality of communication nodes corresponding to a physical device or to a group of physical devices of said utility grid;
- a communication bus for connecting said communication nodes in such a way that said communication nodes can communicate.

The communication nodes are configured to communicate through a publisher/subscriber communication protocol of brokered type.

Each communication node includes a broker component and at least one between a publisher component and a subscriber component configured to interact with said broker component. The broker components of the communication nodes are configured to access said communication bus and communicate one to another through said communication bus.

The broker components of said communication nodes are configured to exchange messages through said communication bus in such a way to allow publisher components and subscriber components of different communication nodes to communicate.

## Description

The present invention relates to a communication system for an electric utility grid, for example a photovoltaic plant or an electric power distribution grid.

As is known, an electric utility grid (e.g. a photovoltaic plant) normally includes a number of IEDs (Intelligent Electronic Devices), i.e. microprocessor-based devices, which may be arranged stand-alone or on board electric or electronic devices.

Normally, the above-mentioned IEDs need to exchange messages (e.g. data messages or command messages or signaling messages) to ensure a suitable operation of the electric utility grid. For this reason, they are generally put in communication through suitable communication buses, thus forming the communication nodes of a distributed communication system supporting the operation of the electric utility grid.

As is known, many communication systems for electric utility grids are based on so-called "publisher/subscriber" communication protocols as these communication protocols are particularly suitable for point-to-multi-point messaging.

A typical example of these communication protocols is represented by the well-known MQTT (Message Queue Telemetry Transport) communication protocol. This is a publisher/subscriber communication protocol of the brokered type, which has been specifically designed for lightweight publisher/subscriber messaging purposes in such a way to improve communication between digital devices having a relatively small code footprint and minimal network bandwidth.

Typically, publisher/subscriber communication protocols are based on communication buses of the multi-master type, for example communication buses of the CAN or TCP type.

However, the arrangement of multi-master communication buses in electric utility grids presents some problems.

First of all, the adoption of these communication buses is relatively expensive from an industrial point of view, which may be incompatible for some low-cost installations.

Additionally, a communication system based on a multi-master communication bus is relatively difficult to implement when the communication nodes are formed by low-level IEDs designed to communicate through single-master communication buses (as it occurs in many cases). Very often, such an intrinsic incompatibility brings to expensive upgrade/replacement interventions on the IEDs (e.g. in order to equip these latter with microcontrollers provided with specific peripheral components or ancillary components) or to exclude the employment of publisher/subscriber communication protocols from certain low-cost applications.

Another problem of the multi-master communication buses consists in that collisions or conflicts between messages transmitted at the same time by different communication nodes may often occur. As a matter of fact, the communication between the various communication nodes of the communication system is not time-deterministic, which may be unacceptable for some applications.

The main aim of the present invention is to provide a communication system for electric utility grids, which allows solving or mitigating the technical problems evidenced above.

Within this aim, an object of the present invention is to provide a communication system, which allows employing publisher/subscriber communication protocols, even when the communication nodes are formed by low-level IEDs designed to communicate through single-master communication buses.

A further object of the present invention is to provide a communication system, which is relatively easy to implement even when the communication nodes are formed by low-level IEDs.

A further object of the present invention is to provide a communication system, which is relatively inexpensive to implement, in particular which allows employing relatively cheap communication buses, for example of the single-master type, such as UART, SPI or I2C. These aim and objects are achieved by a communication system, according to the following claim 1 and the related dependent claims.

In a general definition, the communication system, according to the invention, comprises:
- a plurality of communication nodes, each corresponding to a physical device or to a group of physical devices of said utility grid;
- a communication bus for connecting said communication nodes in such a way that said communication nodes can communicate one to another.

In the communication system, according to the invention, the communication nodes are configured to communicate through a publisher/subscriber communication protocol of brokered type.

According to the invention, each communication node includes a broker component and at least two communication nodes comprise at least one between a publisher component and a subscriber component configured to interact with said broker component.

The broker components of said communication nodes are configured to access the communication bus and communicate one to another through said communication bus.

The broker components of said communication nodes are configured to interact through the communication bus in such a way to allow publisher components and subscriber components of different communication nodes to communicate.

According to an aspect of the invention, the communication nodes are configured to perform a communication procedure including the following steps:
- a step, in which a publisher component of a communication node makes available a publishing message related to a predefined topic to the broker component of the communication node;
- a step, in which the broker component of the communication node transmits the publishing message to the broker component of at least a further communication node, through the communication bus;
- a step, in which the broker component of the at least a further communication node transmits the publishing message to at least a subscriber component of the at least a further communication node, if the at least a subscriber component has subscribed said predefined topic.

According to an aspect of the invention, the above-mentioned communication bus is of the single-master type and said communication nodes comprise a master communication node and one or more slave communication nodes.

The master communication node includes a polling component configured to transmit enabling messages in order to enable each slave communication node to access the communication bus, according to a predefined time basis.

Preferably, the communication nodes are configured to perform a communication procedure including the following steps:
- a step, in which a publisher component of a slave communication node makes available a publishing message related to a predefined topic to the broker component of the slave communication node;
- a step, in which the broker component of the slave communication node puts in stand-by the publishing message;
- a step, in which the broker component of the slave communication node receives an enabling message transmitted by the polling component of a master communication node;
- a step, in which the broker component of the slave communication node transmits the publishing message to the broker component of at least a further communication node, through the communication bus;
- a step, in which the broker component of the at least a further communication node transmits the publishing message to at least a subscriber component of the at least a further communication node, if the at least a subscriber component has subscribed the predefined topic.

According to an aspect of the invention, the broker component of each communication node is configured to store mapping information related to the topics subscribed by the subscriber components of one or more further communication nodes.

Preferably, the broker component of each communication node is configured to check the stored mapping information before transmitting a publishing message to the broker component of at least a further communication node.

Preferably, the broker component of each communication node is configured to transmit the publishing message only to the broker component of each further communication node, which includes at least a subscriber component that has already subscribed the topic of the publishing message.

According to an aspect of the invention, the broker component of each communication node is configured to transmit a publishing message to the broker component of at least a further communication node, only if at least a subscriber component of the at least a further communication node has not already received the publishing message.

Preferably, the communication nodes are configured to perform a communication procedure including the following steps:
- a step, in which a publisher component of a communication node makes available a publishing message related to a predefined topic to the broker component of the communication node;
- a step, in which the broker component of the communication node generates a hash message related to the predefined topic, the hash message including hash information obtained by coding information included in the publishing message;
- a step, in which the broker component of the communication node transmits the hash message to the broker component of at least a further communication node, through the communication bus;
- a step, in which the broker component of the at least a further communication node transmits the hash message to at least a subscriber component of the at least a further communication node, if the at least a subscriber component has subscribed the predefined topic;
- a step, in which the at least a subscriber component of the at least a further communication node compares the hash information of the received hash message with reference information stored by the subscriber component;
- a step, in which the at least a subscriber component of the at least a further communication node transmits a request message to the broker component of the at least a further communication node, if the hash information of the received hash message is different from the reference hash information;
- a step, in which the broker component of the at least a further communication node transmits the request message to the broker component of the communication node, through the communication bus;
- a step, in which the broker component of the communication node transmits the publishing message to the broker component of the at least a further communication node, through the communication bus;
- a step, in which the broker component of the at least a further communication node transmits the publishing message to the at least a subscriber component of the at least a further communication node;
- a step, in which the at least a subscriber component of the at least a further communication node stores the hash information of the received hash message as new reference information. According to an aspect of the invention, the broker component of each communication node can be configured to transmit a feedback message to the broker component of at least a further communication node, upon receiving a publishing message from the broker component of the at least a further communication node, the feedback message being indicative of whether the broker component of the communication node has successfully stored a message sent by the broker component of the at least a further communication node.

According to an aspect of the invention, the broker component of each communication node is configured to transmit multiple publishing messages, received from multiple publisher components of the communication node, according to priority levels assigned by the publisher components.

According to an aspect of the invention, the broker component of each communication node is configured to transmit multiple publishing messages received from the broker components of further communication nodes to a subscriber component of the communication node, according to priority levels assigned by the publisher components or the broker components of the further communication nodes.

Further characteristics and advantages of the present invention shall emerge more clearly from the description of preferred but not exclusive embodiments illustrated purely by way of example and without limitation in the attached drawings, in which:
Figure 1 schematically illustrates the communication system, according to the invention;
Figures 2-11 schematically illustrate the operation of the communication system, according to the invention.

With reference to the mentioned figures, the present invention relates to a communication system 1 for an electric utility grid.

The communication system 1, according to the invention, is particularly suitable for implementation in a photovoltaic plant or an electric power distribution grid. However, it may be successfully implemented also in applications of different type, e.g. solar panel plants, wind turbine plants, combined heat and power plants, marine energy generation plants, geothermal or biomass energy generation plants, fuel cell energy generation plants, electric vehicle charging plants, micro-grids, smart-grids, and the like.

The communication system 1 comprises a plurality of communication nodes N_{A}, N_{B}, N_{C}, N_{D}, each corresponding to a physical device, namely an IED (Intelligent Electronic Device), of the electric utility grid.

As mentioned above, IEDs are microprocessor-based devices, which may be arranged as stand-alone units (e.g. as grid controllers) or on board electric or electronic apparatuses or devices of known type, e.g. as controllers embedded in switching apparatuses, inverters, converters, protection relays, sensors, and the like.

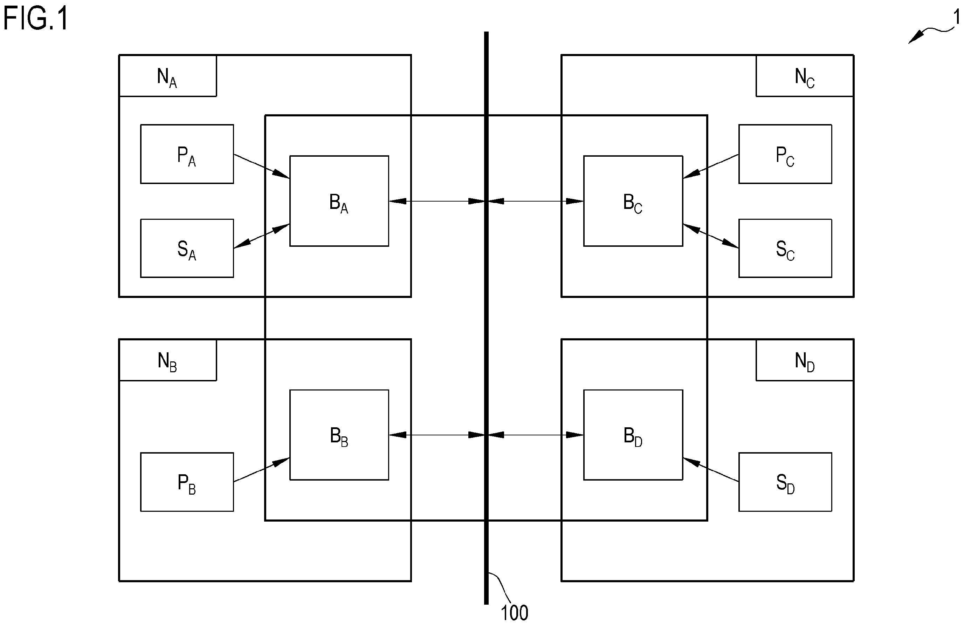

In figure 1, a communication system including only four communication nodes is shown for the sake of simplicity. It is intended however that the communication system 1 may included any number of communication nodes, according to the needs.

The communication system 1 comprises a communication bus 100 for connecting the communication nodes N_{A}, N_{B}, N_{C}, N_{D} in such a way that these latter can mutually communicate. The communication nodes N_{A}, N_{B}, N_{C}, N_{D} are configured to communicate by adopting a publisher/subscriber communication protocol of brokered type, for example a MQTT communication protocol.

As is known, in common publisher/subscriber communication protocols, messages sent by senders (which are normally referred to as "publishers" at application level) are not directed to specific receivers (which are normally referred to as "subscribers" at application level) but are instead categorized according to certain classes (normally referred as "topics") without knowledge of which receiver may receive these messages. On the other hand, subscribers can only express interest in one or more topics and receive only the messages of interest, without knowledge of which publishers have sent these messages.

In the publisher/subscriber communication protocols of the brokered type, publishers send messages to third entities (which are normally referred to as "brokers" at application level), which provide for dispatching messages to subscribers, according to the topics subscribed by these latter. Brokers therefore act as intermediate entities between senders (publishers) and receivers (subscribers) of messages.

Each communication node N_{A}, N_{B}, N_{C}, N_{D} of the communication system 1 includes a number of software modules or programs stored therein, which are configured to perform, at application level, some specific functionalities, when executed by suitable digital processing resources, for example a micro-processor.

In general, the communication nodes N_{A}, N_{B}, N_{C}, N_{D} include broker components, publisher components and subscriber components.

For the sake of clarity, it is specified that:
- a "publisher component" is a stored software module or program including software instructions configured in such a way to implement, at application level, the basic functionalities of a publisher, when executed by suitable digital processing resources. The basic purpose of a publisher component is making available (or publishing) "publishing messages" that are preliminarily categorized by the publisher component according to predefined topics;
- a "publishing message" is a message provided by a publisher component, which is categorised by this latter according to a certain topic (e.g. a certain class of subjects or attributes) and it may be transmitted in response to an event, for example in response to an external event. A publishing message may include, for example, an alarm string, a data string related to a physical quantity detected by a sensor, a command string, and the like;
- a "subscriber component" is a stored software module or program including software instructions configured in such a way to implement, at application level, the basic functionalities of a subscriber, when executed by suitable digital processing resources. The basic purpose of a subscriber component is receiving publishing messages related to the predefined topics previously subscribed by the subscriber component;
- a "broker component" is a stored software module or program including software instructions configured in such a way to implement, at application level, the basic functionalities of a broker, when executed by suitable digital processing resources. The basic purpose of broker component is dispatching the publishing messages to the appropriate subscriber components, according to the predefined topics subscribed by the subscriber components.

As it will be apparent from the following, the above-mentioned software components of the electric nodes N_{A}, N_{B}, N_{C}, N_{D} are configured to perform the basic functionalities foreseen by publisher/subscriber communication protocols of the brokered type. However, the above-mentioned software components of the electric nodes N_{A}, N_{B}, N_{C}, N_{D} are configured to perform also some more specific functionalities, according the innovative aspects of the invention. According to the invention, each communication node N_{A}, N_{B}, N_{C}, N_{D} includes a broker component B_{A}, B_{B}, B_{C}, B_{D} and, optionally, a publisher component P_{A}, P_{B}, P_{C} or a subscriber component S_{A}, S_{C}, S_{D} or both a publisher a component and a subscriber component

In practice, each communication node N_{A}, N_{B}, N_{C}, N_{D} of the communication system 1 includes a broker component B_{A}, B_{B}, B_{C}, B_{D}, which is conveniently configured to manage the communication internally and towards other communication nodes.

Additionally, at least two communication nodes N_{A}, N_{B}, N_{C}, N_{D} of the communication system 1 include one or more publisher components and/or one or more subscriber components. For example, a communication node N_{A}, N_{B}, N_{C}, N_{D} may include both one or more publisher components and one or more subscriber components, or just one or more publisher components, or just one or more subscriber components, in addition to the broker component. However, in principle, one or more communication nodes of the communication system may include only a broker component.

In the example shown in figure 1, the communication nodes N_{A}, N_{C} include both a publisher component P_{A}, P_{C} and a subscriber component S_{A}, S_{C} in addition to the corresponding broker components B_{A}, B_{C}. The communication node N_{B} and the communication node N_{D} include only a publisher component P_{B} and a subscriber component S_{D} in addition to the corresponding broker components B_{B}, B_{D}.

The skilled person will certainly understand that the communication nodes N_{A}, N_{B}, N_{C}, N_{D} may be arranged also according to solutions of different type, which however fall within the concept of the present invention.

Each publisher component P_{A}, P_{B}, P_{C} or subscriber component S_{A}, S_{C}, S_{C} is preferably configured to interact with the broker component B_{A}, B_{B}, B_{C}, B_{D} of the same communication node according to a mode similar to that foreseen by a traditional publisher/subscriber communication protocol of the brokered type.

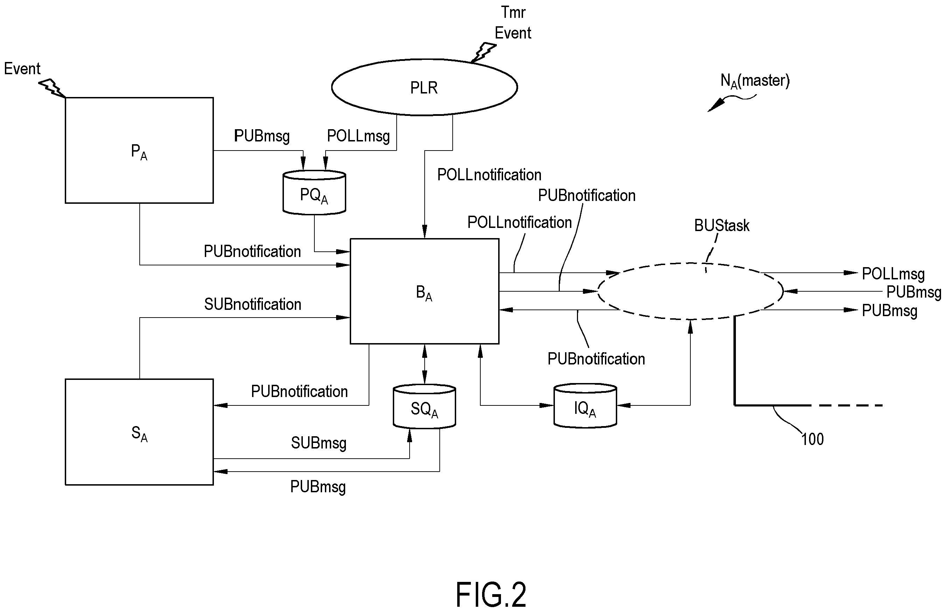

Figures 2-3 show an example on how a broker component B_{A}, B_{C} and a publisher component P_{A}, P_{C} of a same communication node N_{A}, N_{C} may interact.

When it has to make available a publishing message *PUBmsg* in response to a certain event (e.g. the detection of a physical quantity), the publisher component P_{A}, P_{C} stores the publishing message *PUBmsg* in a suitable storage memory PQ_{A}, PQ_{CC} (which may be arranged as a queue, a list, a stack, or the like) and sends a suitable notification message *PUBnotification* to the broker component B_{A}, B_{C}. In response to the received notification message *PUBnotification,* the broker component B_{A}, B_{C} retrieves the publishing message *PUBmsg* to be published from the storage memory PQ_{A}, PQ_{C} and provides for dispatching it in a suitable way.

Figures 2-3 show an example on how a broker component B_{A}, B_{C} and a subscriber component S_{A}, S_{C} of a same communication node N_{A}, Nc may interact.

When it has to transmit a publishing message *PUBmsg* to a subscriber component S_{A}, S_{C}, which has already subscribed the topic of said message, the broker component B_{A}, B_{C} of a communication node N_{A}, N_{C} stores the publishing message *PUBmsg* in a suitable storage memory SQ_{A}, SQ_{C} and sends a suitable notification message *PUBnotification* to the subscriber component S_{A}, S_{C}. In response to the notification message *PUBnotification* received from the broker component B_{A}, B_{C}, the subscriber component S_{A}, S_{C} retrieves the publishing message *PUBmsg* to be published from the storage memory SQ_{A}, SQ_{C}.

Figures 2-3 show an example on how a subscriber component S_{A}, Sc of a communication node may interact with the broker component B_{A}, B_{C} of a same communication node N_{A}, N_{C} to subscribe a topic, i.e. communicate the interest of receiving only the messages categorized in a certain class.

When it has to subscribe a certain topic, the subscriber component S_{A}, Sc stores a subscription message *SUBmsg* in a suitable storage memory SQ_{A}, SQ_{C} and sends a suitable notification message *SUBnotification* to the broker component B_{A}, B_{C}. In response to the received notification message *SUBnotification,* the broker component B_{A}, B_{C} retrieves the subscription message *SUBmsg* and updates suitable stored mapping information related to the topics subscribed by the subscriber components of the communication node.

Preferably, when a same communication node N_{A}, N_{C} includes both publisher components P_{A}, P_{C} and subscriber components S_{A}, S_{C}, the broker component B_{A}, B_{C} of the communication node N_{A}, N_{C} is configured to operate according to a mode similar to that foreseen by publisher/subscriber communication protocols of the brokered type in order to allow an exchange of messages between publisher components B_{A}, B_{C} and subscriber components of the same communication node.

Preferably, the communication nodes N_{A}, N_{C}, which include both one or more publisher components P_{A}, P_{C} and one or more subscriber components S_{A}, S_{C}, are configured to perform a communication procedure including the following steps:
- a step, in which a publisher component P_{A}, P_{C} of a communication node N_{A}, N_{C} makes available a publishing message *PUBmsg* related to a predefined topic to the broker component B_{A}, B_{C} of the communication node;
- a step, in which the broker component B_{A}, B_{C} of the communication node transmits the publishing message *PUBmsg* to a subscriber component S_{A}, S_{C} of the communication node, if the subscriber component has subscribed the predefined topic.

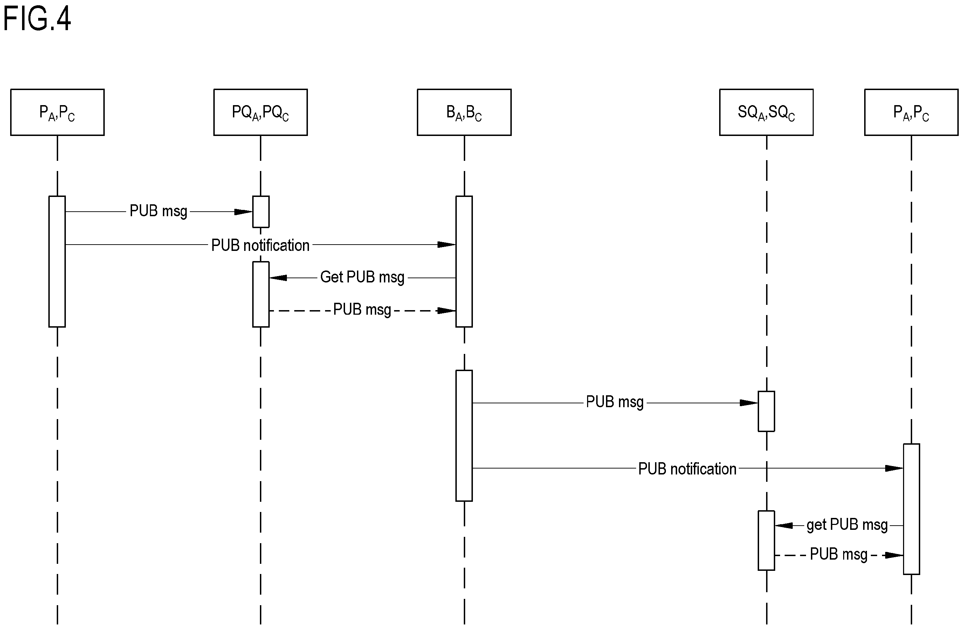

Figure 4 schematically shows an example describing how the above-illustrated communication procedure may be implemented in practice.

When it has to make available a publishing message *PUBmsg* (e.g. in response to a certain event), a publisher component P_{A}, P_{C} of a communication node N_{A}, N_{C} stores the publishing message *PUBmsg* in a suitable storage memory PQ_{A}, PQ_{C} and sends a suitable notification message *PUBnotification* to the corresponding broker component B_{A}, B_{C} of the same communication node.

If there is a subscriber component S_{A}, S_{C} of the same communication node N_{A}, N_{C}, which has subscribed the topic of the publishing message *PUBmsg,* in response to the received notification message *PUBnotification,* the broker component B_{A}, B_{C} retrieves the publishing message *PUBmsg* from the storage memory PQ_{A}, PQ_{C}, stores the publishing message in a suitable storage memory SQ_{A}, SQ_{C} and sends a suitable notification message *PUBnotification* to the subscriber component S_{A}, S_{C}.

If there is not a subscriber component SA, Sc of the further communication node N_{A}, N_{C}, which has subscribed the topic of the publishing message *PUBmsg,* the broker component B_{C} of the further communication node Nc will simply not dispatch the publishing message *PUBmsg.*

In response to the notification message *PUBnotification* received from the broker component B_{A}, B_{C}, the subscriber component S_{A}, S_{C} retrieves the publishing message *PUBmsg* from the storage memory SQ_{A}, SQ_{C}.

According to the invention, the broker component B_{A}, B_{B}, B_{C}, B_{D} of each communication node N_{A}, N_{B}, N_{C}, N_{D} is configured to access the communication bus 100.

The broker components B_{A}, B_{B}, B_{C}, B_{D} of the communication nodes N_{A}, N_{B}, N_{C}, N_{D} can conveniently interact with the communication bus 100 in a way similar to that foreseen by a traditional communication bus.

Figures 2-3 show an example on how a broker component B_{A}, B_{C} of a communication node N_{A}, N_{C} may interact with the communication bus 100.

When it has to provide a certain message *PUBmsg* to the broker component B_{A}, B_{C} of a communication node, the communication bus 100 carries out a specific task *BUStask,* in which it stores the message *PUBmsg* in a suitable storage memory IQ_{A}, IQ_{C} and sends a suitable notification message *PUBnotification* to the broker component B_{A}, B_{C}. In response to the received notification message *PUBnotification,* the broker component B_{A}, B_{C} retrieves the message *PUBmsg* made available by the communication bus 100.

When it has to transmit a certain message *PUBmsg* through the communication bus 100, the broker component B_{A}, B_{C} of a communication node stores the message *PUBmsg* in a suitable storage memory IQ_{A}, IQ_{C} and sends a suitable notification message *PUBnotification* to the communication bus 100. In response to the received notification message *PUBnotification,* the communication bus 100 carries out another specific task *BUStask* in which it retrieves the message *PUBmsg* made available by the broker component B_{A}, B_{C} and transmits towards other communication nodes.

In the communication system 1, the access to the communication bus 100 is limited to the broker components B_{A}, B_{B}, B_{C}, B_{D}.

Conveniently, the one or more publisher components P_{A}, P_{B}, P_{C} and/or one or more subscriber components S_{A}, S_{C}, S_{D} of each communication node N_{A}, N_{B}, N_{C}, N_{D} are prevented from accessing to the communication bus 100.

In practice, a publisher component or a subscriber component of a given communication node N_{A}, N_{B}, N_{C}, N_{D} has necessarily to interact with the broker component N_{A}, N_{B}, N_{C}, N_{D} of the same communication node in order to make available messages or receive messages though the communication bus 100.

An essential aspect of the invention consists in that the broker components B_{A}, B_{B}, B_{C}, B_{D} of the communication nodes N_{A}, N_{B}, N_{C}, N_{D} are configured to interact (by exchanging suitable messages) through the communication bus 100 in such a way to realize a distributed broker structure that allows publisher components and subscriber components of different communication nodes to communicate (i.e. exchange messages).

Preferably, the communication nodes N_{A}, N_{B}, N_{C}, N_{D} of the communication system 1 are configured to perform a communication procedure including the following steps:
- a step, in which a publisher component P_{A} of a communication node N_{A} makes available a publishing message *PUBmsg* related to a predefined topic to the broker component B_{A} of said communication node;
- a step, in which the broker component B_{A} of the communication node transmits the publishing message *PUBmsg* to the broker component B_{C} of a further communication node Nc, through the communication bus 100;
- a step, in which the broker component B_{C} of the further communication node N_{C} transmits the publishing message PUBmsg to a subscriber component S_{C} of the further communication node N_{C}, if the subscriber component has subscribed the predefined topic.

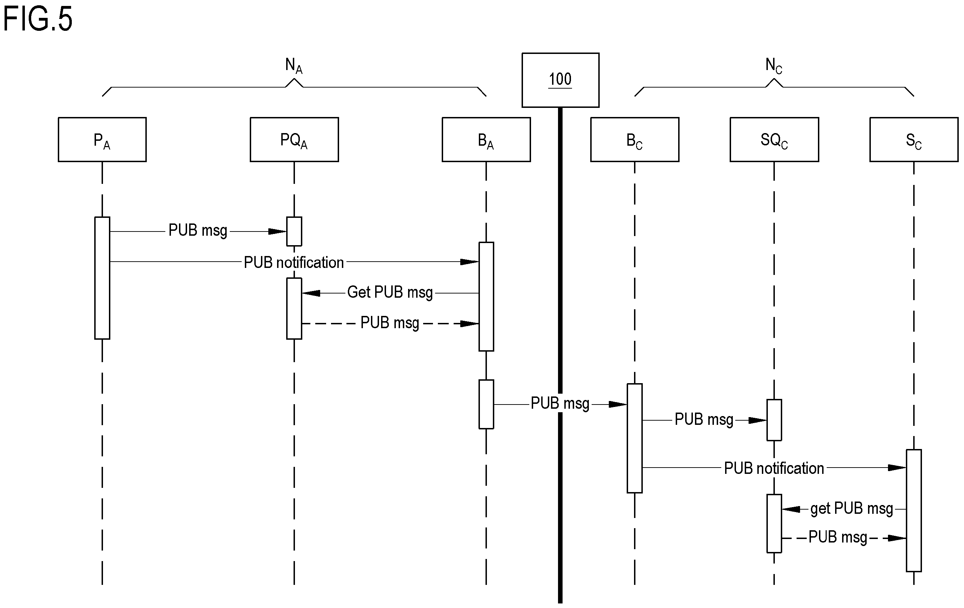

Figure 5 schematically shows an example describing how the above-illustrated communication procedure may be implemented in practice.

When it has to make available a publishing message *PUBmsg* (e.g. in response to a certain event), a publisher component P_{A} of a communication node N_{A} stores the publishing message *PUBmsg* in a suitable storage memory PQ_{A} and sends a suitable notification message *PUBnotification* to the corresponding broker component B_{A} of the communication node N_{A}.

In response to the received notification message *PUBnotification,* the broker component B_{A} retrieves the publishing message *PUBmsg* to be published from the storage memory PQ_{A} and transmits the publishing message to the broker component B_{C} of a further communication node Nc through the communication bus 100.

The interaction of the broker components B_{A}, B_{C} with the communication bus 100 to transmit and receive the publishing message *PUBmsg* conveniently occurs as described above.

If there is a subscriber component S_{C} of the further communication node N_{C}, which has subscribed the topic of the publishing message *PUBmsg,* the broker component B_{C} of the further communication node Nc stores the publishing message in a suitable storage memory SQ_{C} and sends a suitable notification message *PUBnotification* to a subscriber component S_{C} of the same communication node.

If there is not a subscriber component S_{C} of the further communication node N_{C}, which has subscribed the topic of the publishing message *PUBmsg,* the broker component B_{C} of the further communication node N_{C} will simply not dispatch the publishing message *PUBmsg.*

In response to the received notification message *PUBnotification,* the subscriber component S_{C} retrieves the publishing message *PUBmsg* from the storage memory SQ_{C}.

In principle, the communication bus 100 may be of the multi-master type, e.g. of the CAN or TCP/IP type. According to preferred embodiments of the invention, however, the communication bus 100 is of the single-master type, e.g. of the UART or SPI type. According to these embodiments of the invention, the communication nodes N_{A}, N_{B}, N_{C}, N_{D} of the communication system 1 include a master communication node N_{A} and one or more slave communication nodes N_{B}, N_{C}, N_{D}.

The selection of the communication node N_{A} to be designated as master communication node is conveniently made during the design phase of the communication system 1.

As the communication node N_{A} is a master communication node, the broker component B_{A} of the communication node is always enabled to access the communication bus 100.

Preferably, the communication node N_{A} includes a polling component PLR, i.e. a stored software module or program including software instructions configured in such a way to implement, at application level, polling functionalities, when executed by suitable digital processing resources. The basic purpose of the polling component PLR is to poll periodically the slave communication nodes N_{B}, N_{C}, N_{D}. In particular, the polling component PLR is configured to transmit enabling messages POLL to the slave communication nodes N_{B}, N_{C}, N_{D} in order to enable these latter to access the communication bus 100, according to a predefined time basis.

The broker component B_{B}, B_{C}, B_{D} of the slave communication node cannot therefore access the communication bus 100 anytime. They have necessarily to wait that the corresponding communication node B_{B}, B_{C}, B_{D} is enabled to access the communication bus 100 by a polling message POLL received by the master communication node N_{A}.

Preferably, the polling component PLR of the master communication node N_{A} transmits the enabling messages POLL to the slave communication nodes N_{B}, N_{C}, N_{D} through the broker component B_{A} of the master communication node N_{A}.

Figure 2 schematically shows an example on how the polling component PLR and the broker component B_{A} of the master communication node N_{A} may interact to transmit the enabling messages *POLL* to the slave communication nodes N_{B}, N_{C}, N_{D}.

When it has to transmit an enabling message *POLL* (preferably in response to a timer event, e.g. a signal generated by a suitable clock), the polling component PLR of the master communication node N_{A} stores the enabling message *POLL* in a suitable storage memory PQ_{A} and sends a suitable notification message *POLLnotification* to the broker component B_{A} of the master communication node.

In response to the received notification message *POLLnotification,* the broker component B_{A} of the master communication node N_{A} retrieves the enabling message *POLL* and transmits it through the communication bus 100 according to the above-described mode.

Since the master communication node N_{A} is always enabled to access the communication node 100, a publisher component P_{A} of the master communication node N_{A} can communicate with a subscriber component S_{C}, S_{D} of a slave communication node Nc, N_{D} according to the communication procedure described above.

Instead, a publisher component P_{B}, P_{C} of a slave communication node N_{B}, N_{C} has necessarily to wait that the corresponding slave communication node N_{B}, N_{C} is enabled to access the communication bus 100 in order to communicate with a subscriber component S_{A}, S_{D} of another communication node N_{A}, N_{D} (which may be the master communication node N_{A} or a slave communication node N_{D}).

Preferably, the communication nodes N_{A}, N_{B}, N_{C}, N_{D} of the communication system 1 are configured to perform a communication procedure including the following steps:
- a step, in which a publisher component P_{B}, P_{C} of a slave communication node N_{B}, N_{C} makes available a publishing message *PUBmsg* related to a predefined topic to the broker component B_{B} of the slave communication node;
- a step, in which the broker component B_{B}, B_{C} of the slave communication node N_{B}, N_{C} puts the publishing message *PUBmsg* in stand-by mode in order to waiting that the slave communication node N_{B}, N_{C} is enabled to access the communication bus 100;
- a step, in which the broker component B_{B}, B_{C} of the slave communication node N_{B}, N_{C} receives an enabling message *POLL* to access the communication bus 100, which is transmitted by the polling component PLR of a master communication node N_{A};
- a step, in which the broker component B_{B}, B_{C} of the slave communication node N_{B}, N_{C} transmits the publishing message *PUBmsg* to the broker component B_{A}, B_{D} of a further communication node N_{A}, N_{D} (which may be the master communication node N_{A} or another slave communication node N_{D}) through the communication bus 100;
- a step, in which the broker component B_{A}, B_{D} of the further communication node N_{A}, N_{D} transmits the publishing message *PUBmsg* to a subscriber component S_{A}, S_{D} of the further communication node, if the subscriber component has subscribed the predefined topic.

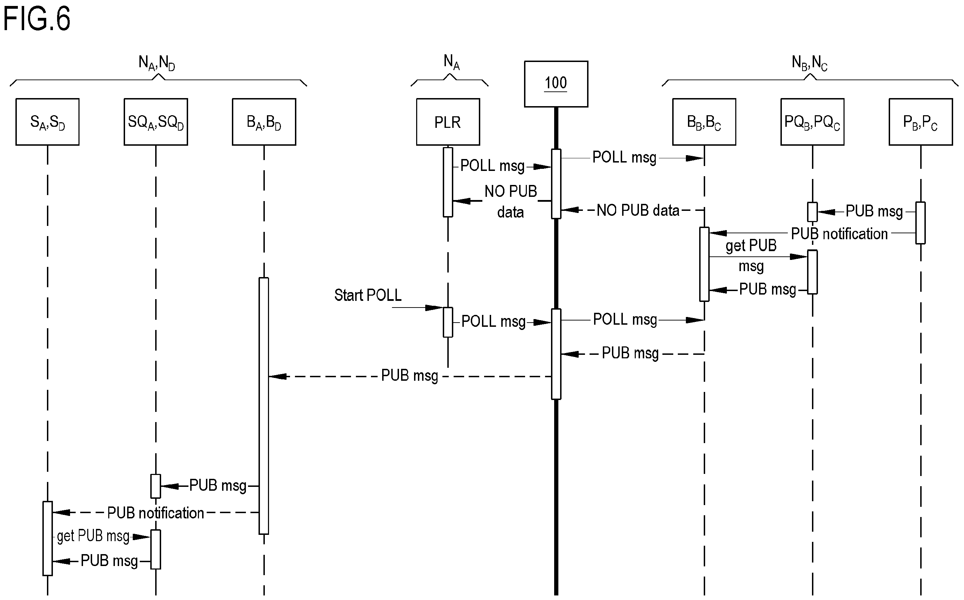

Figure 6 schematically shows an example describing how the above-illustrated communication procedure may be implemented in practice.

A slave communication node N_{B}, Nc cyclically receives an enabling message *POLL* from the master communication node N_{A}, which enables the slave communication node N_{B}, Nc to access the communication bus 100. If there are no publishing messages to transmit when it receives an enabling message *POLL,* the broker component B_{B}, B_{C} of the slave communication node N_{B}, N_{C} transmits a notification message *NoPUBmsg* to the master communication node N_{A}. When it has to make available a publishing message *PUBmsg* (e.g. in response to a certain event), a publisher component P_{B}, P_{C} of the slave communication node N_{B}, N_{C} stores the publishing message *PUBmsg* in a suitable storage memory PQ_{B}, PQ_{C} and sends a suitable notification message *PUBnotification* to the broker component B_{B}, B_{C} of the communication node N_{B}, N_{C}.

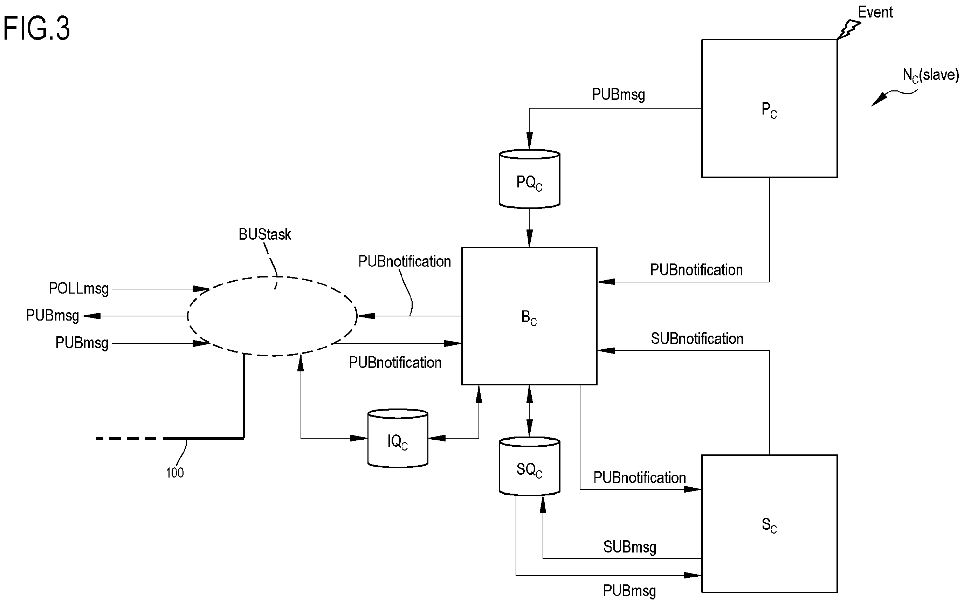

In response to the received notification message *PUBnotification,* the broker component B_{B}, B_{C} retrieves the publishing message *PUBmsg* from the storage memory PQ_{B}, PQc and puts the message in a stand-by mode by storing it in a suitable storage memory. Such a storage memory may be the storage memory IQc accessible when broker component B_{B}, B_{C} interacts with the communication bus 100 (figure 3).

In this situation, the broker component B_{B}, B_{C} is not enabled to access the communication bus 100 and it has necessarily to wait for receiving an enabling message *POLL* from the master communication node N_{A}.

At a certain instant, the broker component B_{B}, B_{C} of the slave communication node N_{B}, N_{C} receives an enabling message *POLL* transmitted by the polling component PLR of the master communication node N_{A} and enabling the slave communication node N_{B}, Nc to access the communication bus 100.

In response to receiving the enabling message POLL, the broker component B_{B}, B_{C} of the slave communication node N_{B}, N_{C} transmits the publishing message *PUBmsg* to the broker component B_{A}, B_{D} of a further communication node N_{A}, N_{D} through the communication bus 100. Such a further communication node may be the master communication node N_{A} or another slave communication node N_{D}.

The interaction of the broker components B_{A}, B_{B}, B_{C}, B_{D} with the communication bus 100 conveniently occurs as described above.

If there is a subscriber component S_{A}, S_{D} of the further communication node N_{A}, N_{D}, which has subscribed the topic of the publishing message *PUBmsg,* the broker component B_{A}, B_{D} of the further communication node Nc stores the publishing message in a suitable storage memory SQc and sends a suitable notification message *PUBnotification* to a subscriber component Sc of the same communication node.

If there is not a subscriber component S_{A}, S_{D} of the further communication node N_{A}, N_{D} which has subscribed the topic of the publishing message *PUBmsg,* the broker component B_{A}, B_{D} of the further communication node N_{A}, N_{D} will simply not dispatch the publishing message *PUBmsg.*

In response to the received notification message *PUBnotification,* the subscriber component S_{A}, S_{D} retrieves the publishing message *PUBmsg* to be published from the storage memory SQ_{A}, SQ_{D}, if the subscriber component has subscribed the predefined topic.

As mentioned above, the broker component B_{A}, B_{B}, B_{C}, B_{D} of each communication node N_{A}, N_{B}, Nc, N_{D} is preferably configured to store first mapping information related to the topics subscribed by the subscriber components of the same communication node.

Preferably, the broker component B_{A}, B_{B}, B_{C}, B_{D} of each communication node N_{A}, N_{B}, N_{C}, N_{D} is configured to check the stored first mapping information before transmitting a publishing message to a subscriber component of the same communication node.

As mentioned above, the broker component B_{A}, B_{B}, B_{C}, B_{D} of each communication node N_{A}, N_{B}, N_{C}, N_{D} is preferably configured to transmit the above-mentioned publishing message (according to the modes described above) only to the one or more subscriber components of the same communication node, which have already subscribed the topic of the publishing message, according to the stored first mapping information.

According to a particular aspect of the invention, the broker component B_{A}, B_{B}, B_{C}, B_{D} of each communication node N_{A}, N_{B}, N_{C}, N_{D} is configured to store second mapping information related to the topics subscribed by the subscriber components S_{A}, S_{C}, S_{D} of the other communication nodes N_{A}, N_{C}, N_{D} of the communication system.

Preferably, the broker component B_{A}, B_{B}, B_{C}, B_{D} of each communication node N_{A}, N_{B}, N_{C}, N_{D} is configured to check the stored second mapping information before transmitting a publishing message to a broker component of another communication node.

Preferably, the broker component B_{A}, B_{B}, B_{C}, B_{D} of each communication node N_{A}, N_{B}, N_{C}, N_{D} is configured to transmit (according to the modes described above) the above-mentioned publishing message only to the broker components of the other communication nodes, which include a subscriber component that has already subscribed the topic of the publishing message, according to the stored second mapping information.

This solution is quite advantageous as it allows reducing the band occupancy necessary for transmitting the publishing messages between the broker components B_{A}, B_{B}, B_{C}, B_{D} of the communication nodes N_{A}, N_{B}, N_{C}, N_{D}.

Obviously, when it receives a subscription to a new topic by a subscriber component of the same communication node, the broker component B_{A}, B_{B}, B_{C}, B_{D} of each communication node N_{A}, N_{B}, N_{C}, N_{D} has to update the stored first mapping information and send a notification to the other broker components of the other communication nodes, so that these latter can update the stored second mapping information.

In this way, the broker components B_{A}, B_{B}, B_{C}, B_{D} of the communication nodes N_{A}, N_{B}, N_{C}, N_{D} can share the same mapping information, which allows optimizing the transmission of publishing messages through the communication bus 100 by the broker components. According to some embodiments of the invention, the broker component B_{A}, B_{B}, B_{C}, B_{D} of each communication node N_{A}, N_{B}, N_{C}, N_{D} is configured to transmit a publishing message *PUBmsg* to the broker component of a further communication node through the communication bus 100, only if a subscriber component Sc of the further communication node has not already received the publishing message.

Also, this solution allows reducing the band occupancy necessary for transmitting the publishing messages between the broker components B_{A}, B_{B}, B_{C}, B_{D} of the communication nodes N_{A}, N_{B}, N_{C}, N_{D}. In particular, this solution addresses the problems deriving from the repeated transmission along the communication bus 100 of publishing messages having heavy payloads that do not vary from a publication event to another.

Preferably, the communication nodes N_{A}, N_{B}, N_{C}, N_{D} of the communication system 1 are configured to perform a communication procedure including:
- a step, in which a publisher component P_{A} of a communication node N_{A} makes available a publishing message *PUBmsg* related to a predefined topic to the broker component B_{A} of the communication node;
- a step, in which the broker component B_{A} of the communication node N_{A} generates a hash message *Hmsg* related to the predefined topic. The hash message *Hmsg* is the hash of the the publishing message *PUBmsg* (in practice *Hmsg* = hash[*PUBmsg*]) and includes hash information H' obtained by coding other information (e.g. the payload) included in the publishing message *PUBmsg,* for example by using hashing algorithms like MD5, SHA and the like;
- a step, in which the broker component B_{A} of the communication node N_{A} transmits the hash message *Hmsg* to the broker component B_{C} of a further communication node N_{C}, through the communication bus 100;
- a step, in which the broker component B_{C} of the further communication node N_{C} transmits the hash message *Hmsg* to a subscriber component S_{C} of the further communication node, if the subscriber component has subscribed the predefined topic;
- a step, in which the subscriber component S_{C} of the further communication node N_{C} compares the hash information H' (calculated hash value) included in the hash message *Hmsg* with reference information H (reference hash value) already stored by the subscriber component S_{C};
- a step, in which the subscriber component S_{C} of the further communication node provides a request message *Req* to the broker component B_{C} of the further communication node N_{C}, if the hash information H' of the hash message *Hmsg* is different from the stored reference hash information H;
- a step, in which the broker component B_{C} of the further communication node Nc transmits the request message *Req* to the broker component B_{A} of the communication node N_{A}, through the communication bus 100. Obviously, this step is carried out if the hash information H' of the hash message *Hmsg* is different from the stored reference hash information H;
- a step, in which the broker component B_{A} of the communication node N_{A} transmits the publishing message *PUBmsg* to the broker component B_{C} of the further communication node Nc, through the communication bus 100;
- a step, in which the broker component B_{C} of the further communication node N_{C} transmits the publishing message *PUBmsg* to the subscriber component S_{C} of the further communication node N_{C};
- a step, in which the subscriber component S_{C} of the further communication node stores the hash information H' of the hash message *Hmsg* as new reference information.

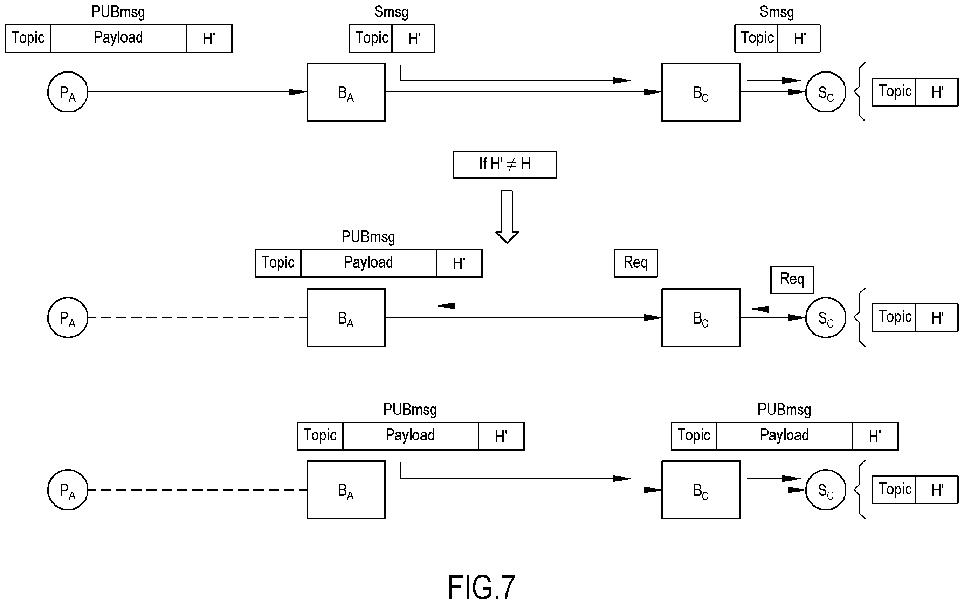

Figure 7 schematically shows an example describing how the above-illustrated communication procedure may be implemented in practice.

The publisher component P_{A} of a communication node N_{A} is supposed to make available a publishing message *PUBmsg* related to a predefined topic in a way as described above.

Conveniently, the publishing message *PUBmsg* comprises a field including the topic related to the publishing message *PUBmsg,* a field including the payload of the publishing message *PUBmsg* and a field including hash information H', more preferably a hash obtained by coding the payload of the publishing message *PUBmsg.*

The broker component B_{A} of the communication node N_{A} retrieves and stores the publishing message *PUBmsg* in the way described above.

However, instead transmitting the publishing message *PUBmsg,* the broker component B_{A} of the communication node N_{A} generates a hash message *Hmsg* related to the predefined topic of the publishing message *PUBmsg,* which includes hash information H' obtained by coding information included in the publishing message PUBmsg.

Conveniently, the hash message *Hmsg* comprises a field including the topic related to the publishing message *PUBmsg* and a field including a hash H' obtained by coding the payload of the publishing message *PUBmsg.* The hash message *Hmsg* is therefore much lighter than the publishing message *PUBmsg.*

The broker component B_{A} of the communication node N_{A} transmits the hash message *Hmsg* to the broker components of the other communication nodes through the communication bus 100, for example to the broker component B_{C} of a further communication node N_{C}.

The broker component B_{C} of the further communication node N_{C} transmits the hash message *Hmsg* to a subscriber component S_{C} of the further communication node NS, if the subscriber component has subscribed the predefined topic of the publishing message *PUBmsg.* Otherwise, the broker component B_{C} of the further communication node N_{C} will simply not dispatch the hash message *Hmsg.*

The subscriber component S_{C} of the further communication node N_{C} compares the hash H' included in the received hash message *Hmsg* with a reference information H already stored by the subscriber component S_{C}.

Conveniently, the reference information H is the hash of a publishing message related to the same topic, which has previously received by the subscriber component S_{C} of the further communication node N_{C}.

If the hash information (hash) H' included in the received hash message *Hmsg* is different from the reference information (reference hash) already stored by the subscriber component S_{C} of the further communication node N_{C}, the subscriber component S_{C} of the further communication node Nc transmits a request message *Req* to the broker component B_{C} of the further communication node N_{C}.

The request message *Req* is a request for receiving the publishing message *PUBmsg.*

The broker component B_{C} of the further communication node N_{C} transmits the request message *Req* to the broker component B_{A} of the communication node N_{A}, through the communication bus 100.

In response to receiving the request message *Req,* the broker component B_{A} of the communication node N_{A} transmits the publishing message *PUBmsg* to the broker component B_{C} of the further communication node N_{C}, through the communication bus 100.

The broker component B_{C} of the further communication node N_{C} then transmits the publishing message *PUBmsg* to the subscriber component S_{C} of the further communication node.

In the meanwhile, the subscriber component S_{C} of the further communication node N_{C} stores the hash information (calculated hash value) H' of the received hash message *Hmsg* as new reference information (reference hash information).

The communication system 1 of the invention is particularly suitable for implementing differentiated levels of Quality of Service (QoS) for the communications between the communication nodes N_{A}, N_{B}, N_{C}, N_{D}, in particular the exchange of messages between the broker components B_{A}, B_{B}, B_{C}, B_{D} of the communication nodes.

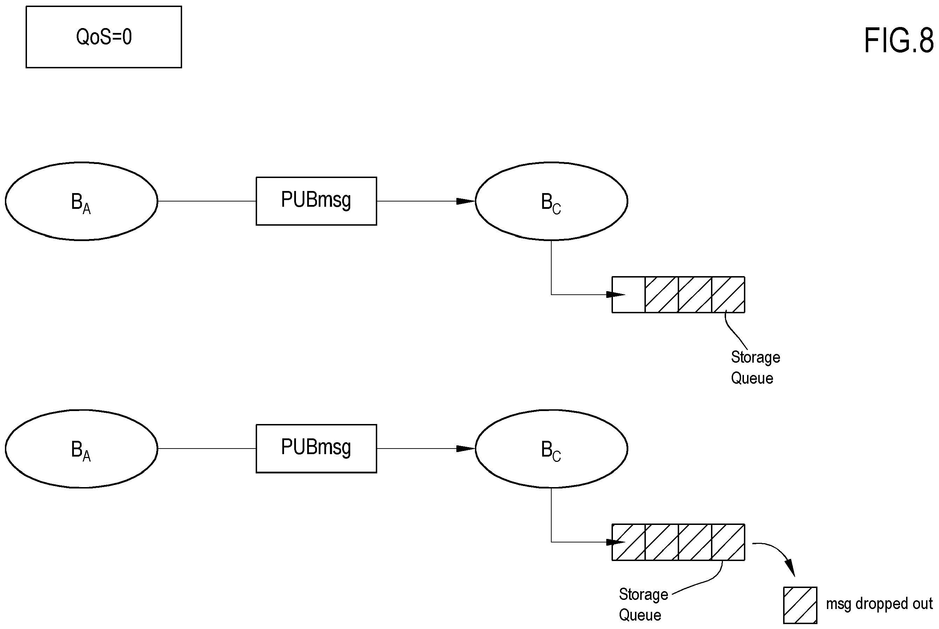

The communication system 1 may obviously implement a minimum quality service level QoS = 0, in which the sender broker component B_{A} has no feedback on whether the receiver broker component B_{C} has successfully stored a message *PUBmsg* sent by the sender broker component B_{A} in a suitable storage memory (figure 8).

However, the communication system 1 may easily implement higher quality service levels.

Preferably, the broker component B_{C} of each communication node N_{C} is configured to transmit a feedback message to the broker component B_{A} of a further communication node N_{A}, upon receiving a message *PUBmsg* from the broker component B_{A} of the further communication node. Conveniently, such a feedback message is indicative of whether the broker component B_{C} of the communication node Nc has successfully stored the message *PUBmsg* sent by the broker component B_{A} of the further communication node N_{A}.

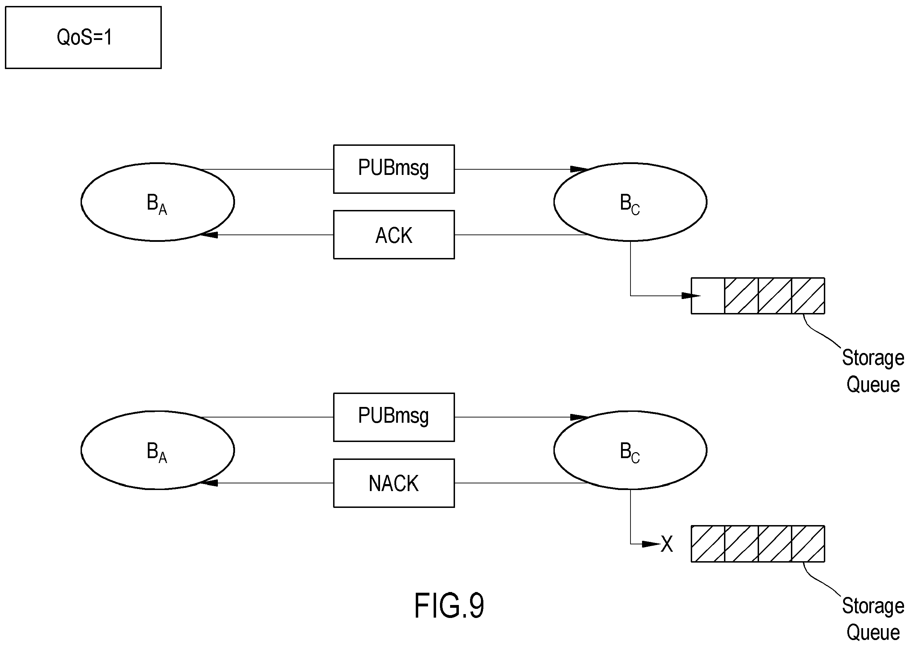

According to some embodiments of the invention (figure 9), the receiver broker component B_{C} transmits an acknowledgement message ACK or a non-acknowledgment message *NACK to* the sender broker component B_{A}, which are respectively indicative that the broker component B_{C} of the communication node Nc has not or has not successfully stored the message *PUBmsg* sent by the broker component B_{A} of the sender communication node N_{A}.

If it can successfully store a message *PUBmsg* received from the sender broker component B_{A}, the receiver broker component B_{C} sends an acknowledgment message ACK to the sender broker component B_{A}.

If it cannot successfully store a message *PUBmsg* received from the sender broker component B_{A}, the receiver broker component B_{C} sends a non-acknowledgment message ACK to the sender broker component B_{A}.

According to these embodiments of the invention, the communication system 1 apparently implements a quality service level QoS = 1.

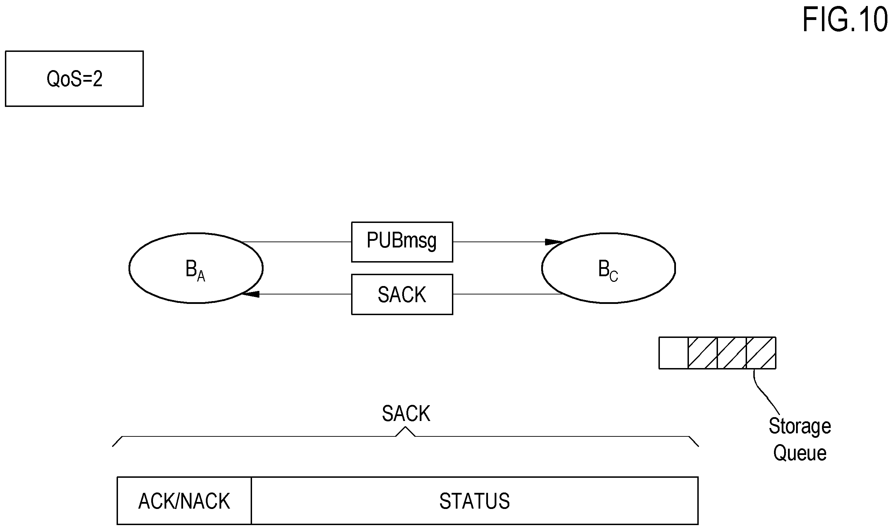

According to other embodiments of the invention (figure 10), the communication system 1 may implement yet a higher quality service level QoS = 2.

In this case, the receiver broker component B_{C} transmits a "smart" feedback message SACK to the sender broker component B_{A}. Such a "smart" message includes acknowledgement information ACK or non-acknowledgement information *NACK* and some additional information *STATUS* indicative of the operating status of the storage memory used by the receiver component B_{C} to store the received messages. As an example, such additional information may include information related to the remaining free space in the storage memory, the expected time to have a memory slot free, and the like.

This solution is quite advantageous as the sender broker component B_{A} receives not only a feedback on the actual condition of a transmitted message *PUBmsg* but also some useful information allowing the sender broker component B_{A} to plan suitably the transmission of the future messages to the receiver broker component B_{C}. For example, the sender broker component B_{A} may plan to anticipate or delay the transmission of a future message basing on the additional information *STATUS* received in response to a transmitted message *PUBmsg.* The communication system 1 of the invention is particularly suitable for managing, according to different levels of priority, the communications between the communication nodes N_{A}, N_{B}, N_{C}, N_{D}, in particular the exchange of multiple publishing messages between the broker components of the communication nodes or between a broker component and the subscriber component of a same communication node.

According to some embodiments of the invention, the broker component B_{A} of each communication node N_{A} is configured to transmit multiple publishing messages *PUBmsg1, PUBmsg2,* received from multiple publisher components P_{A1}, P_{A2}, according to priority levels assigned by the publisher components P_{A1}, P_{A2} of the communication node N_{A}.

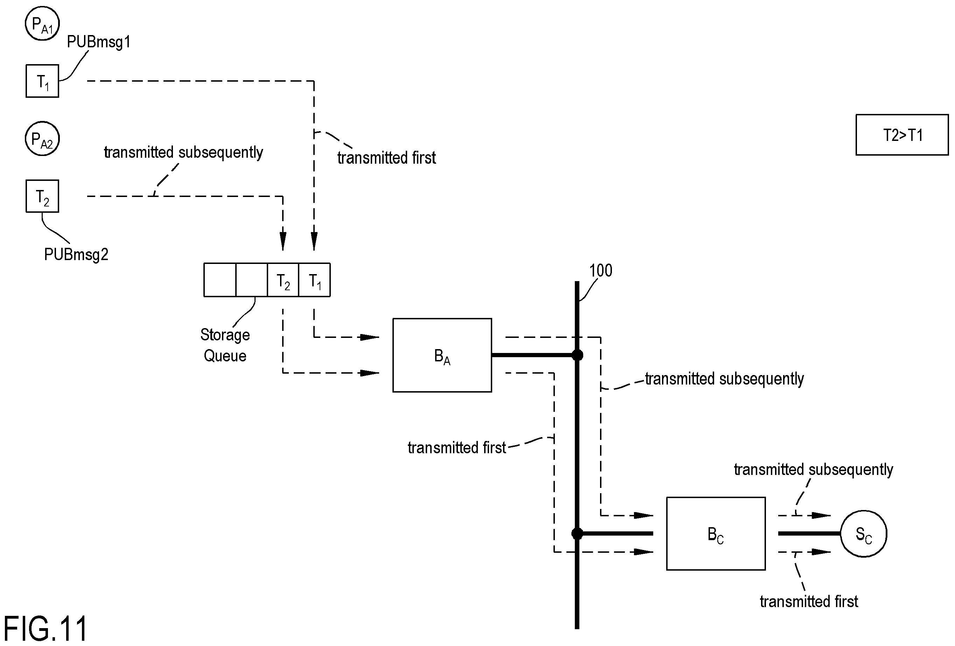

Figure 11 schematically shows an example describing the operation of this solution provided by the present invention.

A communication node N_{A} is supposed to include multiple publisher components P_{A1}, P_{A2}.

A first publisher component P_{A1} is supposed to be the first to make available a first publishing message *PUBmsg1* and a second publisher component P_{A2} is supposed to make available a second publishing message *PUBmsg2* subsequently to the first publisher component.

The first and second publisher components P_{A1}, P_{A2} are supposed to have assigned a first priority level T1 and a second priority level T2 to the publishing messages *PUBmsg1, PUBmsg2.* The second priority level T2 is supposed higher than the first priority level T1. Both the publishing messages *PUBmsg1, PUBmsg2* are supposed to be stored in suitable storage waiting for being retrieved and transmitted by the broker component B_{A} of the communication node N_{A}.

Normally, the broker component B_{A} of the communication node N_{A} would transmit the publishing messages *PUBmsg1, PUBmsg2* to the broker component B_{C} of a further communication node Nc according to the time order in which the messages have been stored in the above-mentioned storage memory.

According to these embodiments of the invention, instead, the broker component B_{A} of the communication node N_{A} preliminarily checks the priority levels assigned to the publishing messages *PUBmsg1, PUBmsg2* and transmits the publishing messages *PUBmsg1, PUBmsg2* to the broker component B_{C} of a further communication node N_{C} according to the priority order of said messages.

The broker component B_{A} of the communication node N_{A} therefore initially transmits the second publishing message *PUBmsg2* and subsequently the first publishing message *PUBmsg1* to the broker component B_{C} of a further communication node N_{C}.

The broker component B_{C} of the communication node Nc will maintain this priority order in transmitting the publishing messages *PUBmsg1, PUBmsg2* to a subscriber component S_{C} of the further communication node N_{C}.

Obviously, the same transmission mechanism of the publishing messages *PUBmsg1, PUBmsg2* can be adopted when the broker component B_{A} of the communication node N_{A} including the publisher components P_{A1}, P_{A2} has to transmit the publishing messages *PUBmsg1, PUBmsg2* to a subscriber component S_{C} of the same communication node N_{C}.

According to some embodiments of the invention, the broker component B_{C} of each communication node N_{C} is configured to transmit multiple publishing messages *PUBmsg1, PUBmsg2* received from the broker components B_{A}, B_{B} of further communication nodes N_{A}, N_{B} to a subscriber component S_{C} of the communication node Nc, according to priority levels assigned by the publisher components P_{A}, P_{B} or the broker components B_{A}, B_{B} of the further communication nodes N_{A}, N_{B}.

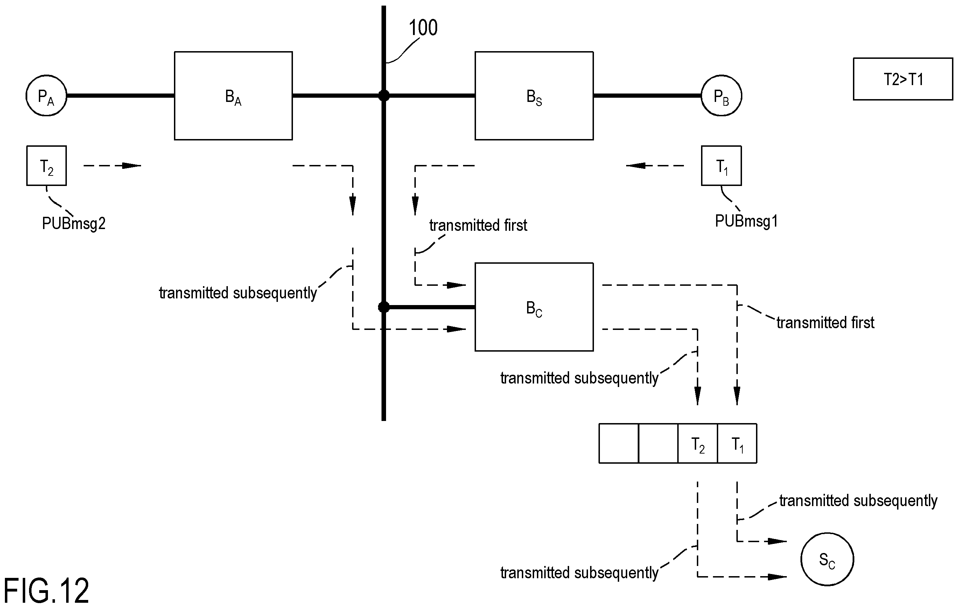

Figure 12 schematically shows an example describing the operation of this solution provided by the present invention.

A communication node N_{A} is supposed to receive a first publishing message *PUBmsg1* and a second publishing message *PUBmsg2* respectively from the broker component B_{A} of a first communication node N_{A} and the broker component B_{B} of a second communication node N_{B}. The broker component B_{A} of the first communication node N_{A} is supposed to be the first to transmit the first publishing message *PUBmsg1* and the broker component B_{B} of the second communication node N_{B} is supposed to transmit the second publishing message *PUBmsg2* subsequently to the first broker component.

A publisher component P_{A} or the broker component B_{A} of the first communication node N_{A} is supposed to have assigned a first priority level T1 to the first publishing message *PUBmsg1* and a publisher component P_{B} or the broker component B_{B} of the second communication node N_{B} is supposed to have assigned a second priority level T2 to the second publishing message *PUBmsg2.* The second priority level T2 is supposed higher than the first priority level T1. Both the publishing messages *PUBmsg1, PUBmsg2* are supposed to be stored in suitable storage waiting for being retrieved and transmitted by the broker component B_{C} of the communication node Nc.

Normally, the broker component B_{C} of the communication node N_{C} would transmit the publishing messages *PUBmsg1, PUBmsg2* to a subscriber component S_{C} of the communication node N_{C} according to the time order in which said messages have been stored in the above-mentioned storage memory.

According to this solution of the invention, instead, the broker component B_{C} of the communication node Nc preliminarily checks the priority levels assigned to the publishing messages *PUBmsg1, PUBmsg2* and transmits the publishing messages *PUBmsg1, PUBmsg2* to the subscriber component Sc according to the priority order of said messages.

The broker component B_{C} of the communication node N_{C} therefore transmits first the second publishing message *PUBmsg2* and subsequently the first publishing message *PUBmsg1* to the subscriber component S_{C} of the communication node N_{C}.

Both the above-described solutions allow solving in a simple and effective manner possible conflicts deriving the concurrent publishing messages provided by the various publisher components of the communication nodes.

The communication system, according to the present invention, is quite effective in solving or mitigating the above-evidenced drawbacks of the state of the art.

In the communication system, according to the invention, publisher components PA, PB, PC and subscriber components SA, SC, SD of different communication nodes communicate by exploiting exchanges of messages of the broker components though the communication bus 100. In practice, the assembly formed by the broker components of the communication nodes and the communication bus 100 forms a distributed broker structure that allow the publisher and subscriber components of the communication nodes to communicate.

Since the access to the communication bus is limited to the broker elements of the communication nodes, the solution provided by the invention allows employing publisher/subscriber communication protocols, even when the communication nodes are formed by low-level IEDs designed to communicate through single-master communication buses.

The communication system, according to the invention, is thus particularly suitable for the electric utility grids, in which the IEDs forming the communication nodes are not equipped with highly performant processing resources.

The communication system, according to the invention, allows employing relatively cheap communication buses, such as communication buses of the single-master type, e.g. UART or SPI or I2C. It is therefore of relatively easy and cost-effective practical implementation.

## Claims

1. A communication system (1) for an electric utility grid, said communication system comprising:
- a plurality of communication nodes (N_{A}, N_{B}, N_{C}, N_{D}) corresponding to a physical device or to a group of physical devices of said utility grid;
- a communication bus (100) for connecting said communication nodes in such a way that said communication nodes can communicate;
wherein said communication nodes (N_{A}, N_{B}, N_{C}, N_{D}) are configured to communicate through a publisher/subscriber communication protocol of brokered type,
**characterised in that** each communication node (N_{A}, N_{B}, N_{C}, N_{D}) includes a broker component (B_{A}, B_{B}, B_{C}, B_{D}) and **in that** at least two communication nodes comprise at least one between a publisher component (P_{A}, P_{B}, P_{C}) and a subscriber component (S_{A}, S_{C}, S_{D}) configured to interact with said broker component,
wherein the broker components (B_{A}, B_{B}, B_{C}, B_{D}) of said communication nodes (N_{A}, N_{B}, N_{C}, N_{D}) are configured to access said communication bus (100) and communicate one to another through said communication bus,
wherein the broker components (B_{A}, B_{B}, B_{C}, B_{D}) of said communication nodes (N_{A}, N_{B}, N_{C}, N_{D}) are configured to exchange messages through said communication bus (100) in such a way to allow publisher components and subscriber components of different communication nodes to communicate.

2. Communication system, according to claim 1, **characterised in that** said communication nodes (N_{A}, N_{B}, N_{C}, N_{D}) are configured to perform a communication procedure including:
- a step, in which a publisher component (P_{A}) of a communication node (N_{A}) makes available a publishing message (PUBmsg) related to a predefined topic to the broker component (B_{A}) of said communication node;
- a step, in which the broker component (B_{A}) of said communication node transmits said publishing message (PUBmsg) to the broker component (B_{C}) of at least a further communication node (N_{C}), through said communication bus (100);
- a step, in which the broker component (B_{C}) of said at last a further communication node transmits said publishing message (PUBmsg) to at least a subscriber component (S_{C}) of said at least a further communication node, if said at least a subscriber component has subscribed said predefined topic.

3. Communication system, according to one or more of the previous claims, **characterised in that** said communication bus (100) is of the single-master type,
wherein said communication nodes (N_{A}, N_{B}, N_{C}, N_{D}) comprise a master communication node (N_{A}) and one or more slave communication nodes (N_{B}, N_{C}, N_{D}),
wherein said master communication node (N_{A}) includes a polling component (PLR) configured to transmit enabling messages (POLL) to enable each slave communication nodes to access said communication bus (100), according to a predefined time basis.

4. Communication system, according to claim 3, **characterised in that** said communication nodes (N_{A}, N_{B}, N_{C}, N_{D}) are configured to perform a communication procedure including:
- a step, in which a publisher component (P_{B}, P_{C}) of a slave communication node (N_{B}, N_{C}) makes available a publishing message (PUBmsg) related to a predefined topic to the broker component (B_{B}, B_{C}) of said slave communication node;
- a step, in which the broker component (B_{B}, B_{C}) of said slave communication node (N_{B}, N_{C}) puts in stand-by said publishing message (PUBmsg);
- a step, in which the broker component (B_{B}, B_{C}) of said slave communication node (N_{B}, N_{C}) receives an enabling message (POLL) transmitted by the polling component (PLR) of a master communication node (N_{A});
- a step, in which the broker component (B_{B}, B_{C}) of said slave communication node (N_{B}, N_{C}) transmits said publishing message (PUBmsg) to the broker component (B_{A}, B_{D}) of at least a further communication node (N_{A}, N_{D}), through said communication bus (100);
- a step, in which the broker component (B_{A}, B_{D}) of said at least a further communication node (N_{A}, N_{D}) transmits said publishing message (PUBmsg) to at least a subscriber component (S_{A}, S_{D}) of said at least a further communication node (N_{A}, N_{D}), if said at least a subscriber component has subscribed said predefined topic.

5. Communication system, according to one or more of the previous claims, **characterised in that** the broker component (B_{A}, B_{B}, B_{C}, B_{D}) of each communication node (N_{A}, N_{B}, N_{C}, N_{D}) is configured to store mapping information related to the topics subscribed by the subscriber components (S_{A}, S_{C}, S_{D}) of one or more further communication nodes (N_{A}, N_{C}, N_{D}).

6. Communication system, according to claim 5, **characterised in that** the broker component (B_{A}, B_{B}, B_{C}, B_{D}) of each communication node (N_{A}, N_{B}, N_{C}, N_{D}) is configured to check the stored mapping information before transmitting a publishing message to a broker component of at least a further communication node.

7. Communication system, according to claim 6, **characterised in that** the broker component (B_{A}, B_{B}, B_{C}, B_{D}) of each communication node (N_{A}, N_{B}, N_{C}, N_{D}) is configured to transmit said publishing message only to the broker component of each further communication nodes, which includes at least a subscriber component that has already subscribed the topic of said publishing message.

8. Communication system, according to one or more of the previous claims, **characterised in that** the broker component (B_{A}, B_{B}, B_{C}, B_{D}) of each communication node (N_{A}, N_{B}, N_{C}, N_{D}) is configured to transmit a publishing message (PUBmsg) to the broker component of at least a further communication node, only if at least a subscriber component (Sc) of said at least a further communication node has not already received said publishing message.

9. Communication system, according to claim 8, **characterised in that** said communication nodes (N_{A}, N_{B}, N_{C}, N_{D}) are configured to perform a communication procedure including:
- a step, in which a publisher component (P_{A}) of a communication node (N_{A}) makes available a publishing message (PUBmsg) related to a predefined topic to the broker component (B_{A}) of said communication node;
- a step, in which the broker component (B_{A}) of said communication node (N_{A}) generates a hash message (Hmsg) related to said predefined topic, said hash message including hash information (H') obtained by coding information included in said publishing message (PUBmsg);
- a step, in which the broker component (B_{A}) of said communication node (N_{A}) transmits said hash message (Hmsg) to the broker component (B_{C}) of at least a further communication node (N_{C}), through said communication bus (100);
- a step, in which the broker component (B_{C}) of said at least a further communication node (N_{C}) transmits said hash message (Hmsg) to at least a subscriber component (S_{C}) of said at least a further communication node, if said at least a subscriber component has subscribed said predefined topic;
- a step, in which said at least a subscriber component (S_{C}) of said at least a further communication node (N_{C}) compares the hash information (H') of the received hash message (Hmsg) with reference information (H) stored by said at least a subscriber component (S_{C});
- a step, in which said at least a subscriber component (S_{C}) of said at least a further communication node (N_{C}) transmits a request message (Req) to the broker component (B_{C}) of said at least a further communication node, if the hash information (H') of the received hash message (Hmsg) is different from said reference hash information (H);
- a step, in which the broker component (B_{C}) of said at least a further communication node (N_{C}) transmits said request message (Req) to the broker component (B_{A}) of said communication node (N_{A}), through said communication bus (100);
- a step, in which the broker component (B_{A}) of said communication node (N_{A}) transmits said publishing message (PUBmsg) to the broker component (B_{C}) of said at least a further communication node (N_{C}), through said communication bus (100);
- a step, in which the broker component (B_{C}) of said at least a further communication node (Nc) transmits said publishing message (PUBmsg) to said at least a subscriber component (S_{C}) of said at least a further communication node;
- a step, in which said at least a subscriber component (S_{C}) of said at least a further communication node (N_{C}) stores the hash information (H') of the received hash message (Hmsg) as new reference information.

10. Communication system, according to one or more of the previous claims, **characterised in that** the broker component (B_{C}) of a communication node (N_{C}) is configured to transmit a feedback message (ACK, NACK, SACK) to the broker component (B_{A}) of at least a further communication node (N_{A}), upon receiving a publishing message (PUBmsg) from the broker component (B_{A}) of said at least a further communication node (N_{A}), said feedback message being indicative of whether the broker component (B_{C}) of said communication node (N_{C}) has successfully stored a message (PUBmsg) sent by the broker component (B_{A}) of said at least a further communication node (N_{A}).

11. Communication system, according to one or more of the previous claims, **characterised in that** the broker component (B_{A}) of each communication node (N_{A}) is configured to transmit multiple publishing messages (PUBmsg1, PUBmsg2), received from multiple publisher components (P_{A1}, P_{A2}) of said communication node, according to priority levels assigned by said publisher components (P_{A1}, P_{A2}).

12. Communication system, according to one or more of the previous claims, **characterised in that** the broker component (B_{C}) of each communication node (N_{C}) is configured to transmit multiple publishing messages (PUBmsg1, PUBmsg2) received from the broker components (B_{A}, B_{B}) of further communication nodes (N_{A}, N_{B}) to a subscriber component (S_{C}) of said communication node (N_{C}), according to priority levels assigned by the publisher components (P_{A}, P_{B}) or broker components (B_{A}, B_{B}) of said further communication nodes (N_{A}, N_{B}).

13. Communication system, according to one or more of the previous claims, **characterised in that** said electric utility grid is a photovoltaic plant, an electric power distribution grid, a solar plant, a wind turbine plant, a combined heat and power plant, a marine energy generation plant, a geothermal or biomass energy generation plant, a fuel cell energy generation plant, an electric vehicle charging plant, a micro-grid, or a smart grid.

14. A photovoltaic plant including a communication system, according to one or more of the claims from 1 to 12.
